# EUROPEAN PATENT APPLICATION

(11) **EP 4 759 418 A1**
(43) Date of publication of application: **17.06.2026**
(21) Application number: 25214154.4
(22) Date of filing: 07.11.2025
(51) Int. Cl.: B02C 4/02

(54) **HAY CONDITIONING APPARATUS**

(30) Priority: 16.12.2024 US 202418982657
(71) Applicant: Deere & Company, Moline, IL 61265 (US)
(72) Inventor: Roth, Darin L., Mannheim (DE); Rotole, David V., Mannheim (DE); Naeger, Robert J., Mannheim (DE)
(74) Representative: Stein, Stefan

(57) **Abstract**

A forage conditioning apparatus may include a first conditioning roller configured to rotate about a first rotational axis and a second conditioning roller configured to rotate about a second rotational axis. The first conditioning roller may include a plurality of first roller segments aligned along the first rotational axis. A plurality of first crimping rings may extend radially with respect to the first rotational axis, each first crimping ring being a generally planar disc located between two adjacent ones of the first roller segments.

## Description

### FIELD OF THE DISCLOSURE

The disclosure generally relates to a conditioning roller assembly, and a mower conditioner including the conditioning roller assembly.

### BACKGROUND

A majority of seasonal crops prepared for hay and forage production contain greater than 65% moisture at the time of cutting. Preservation of crop after cutting requires a measure of drying prior to packaging, shipping, or storing. To shorten dry down time of hay and forage crops after cutting, owners further process, or condition crops with mechanisms that crimp, scrape, and crush plants. Cutting and conditioning crop often occurs by the same implement during the same pass. Cut and damaged portions of processed plants enable an avenue for moisture to escape and are impacted by environmental factors including temperature and relative humidity. With further crop processing, moisture doesn't take as much time to travel through an entirety of a plant. It can escape via a shorter route through marked structural, cellular damage along the plant's stem. Moisture escapes a plant through a path of least resistance; it is often the nearest damage to the plant made during cutting and conditioning operations.

Plant respiration (air movement) and transpiration (fluid movement) continue after a plant is cut. Both biological mechanisms enable moisture reduction in plants. Conditioning crop or further processing greatly improves initial drying for the first 10%-15% of moisture loss. Consequently, conditioning can save time to the next pass in hay and forage production. Rapid dry down reduces losses of starches and sugars and preserves more dry matter and total digestible nutrients in harvested forage, and thus, improves forage quality.

Current mowing implements offer on-board conditioning systems having at least one rotating element with an axis perpendicular to travel that crimps, scrapes, or further damages crop. Stems flowing tangentially along a pitch line are either pinched between rotating and stationary elements or crimped between two or more rotating rolls. Damage of crop occurs at a point of intersection described by tangential crop flow along circumferences, perpendicular between axis of rotating components.

These systems are limited in both performance (conditioning) and capacity (yield) since tine or lug trajectories are not necessarily aligned with stem orientations or crop flow. Crop may be rejected back in front of the conditioner unit leading to plugs or over-processing. Or worse, a randomly oriented stem aligned between conditioning lugs may not get processed at all.

Yield content differs across hay fields depending on agricultural practice, environment, and soil condition. Varied yields and dis-oriented strands lead to non-uniform crop flow through mowing and conditioning implements. A heavier yield may occur on one side resulting from a cut overlap on the other side. Inactive, set parameters such as constant header speeds, roll gap, and conditioner tension lead to undesirable, non-uniform conditioning results during passes having significant yield differences. Non-uniform conditioning delays a next operation. Highest moisture and least conditioned crop must dry to at least the desired moisture. Unfortunately, this requires the longest environmental exposure to properly prepare hay and forage crops for harvest.

Consequently, manufacturers have created conditioner designs that exhibit extreme conditioning to plants. They are not optimized for variable material content or mis-aligned stems.

### SUMMARY

It is an object of this disclosure to provide a universal mechanical means to more uniformly condition crop of all varieties, stem lengths, and yield quantity with less plugging, improving dry down, and enhancing forage quality. These conditioner concepts enable conditioning marks to be placed gently and uniformly along lengths of stems without further severing plants into smaller pieces; or, indelibly damaging them by further separating leaves from branches and branches from stems.

This may be accomplished by segmenting conditioning rollers, operating at traditional speeds, into elements that are shorter than most common stem lengths. Thus, conditioning marks are applied with even spacing along plants no matter their orientation. Likewise, with an operating speed or tangential velocity that matches crop flow, these rolls offer the same resistance to plugging and recirculation as standard, fluted rolls.

In one embodiment a forage conditioning apparatus may include a first conditioning roller configured to rotate about a first rotational axis and a second conditioning roller configured to rotate about a second rotational axis. The first conditioning roller may include a plurality of first roller segments aligned along the first rotational axis. A plurality of first crimping rings may extend radially with respect to the first rotational axis, each first crimping ring being a generally planar disc located between two adjacent ones of the first roller segments.

In another embodiment, a forage conditioning apparatus may include first and second conditioning rollers configured to rotate about first and second rotational axes. The first and second conditioning rollers may be arranged to rotate in opposite directions about their respective rotational axes to condition crop material fed between the first and second conditioning rollers. The first conditioning roller may be a segmented roller including a plurality of first roller segments aligned along the first rotational axis and a plurality of first crimping rings extending radially with respect to the first rotational axis, each first crimping ring being a generally planar disc including a toothed outer peripheral edge, each of the first crimping rings being located between two adjacent ones of the first roller segments. The second conditioning roller may be a second segmented roller including a plurality of second roller segments aligned along the second rotational axis. A plurality of second crimping rings may extend radially with respect to the second rotational axis, each second crimping ring being a generally planar disc including a toothed outer peripheral edge, each of the second crimping rings being located between two adjacent ones of the second roller segments, and the toothed outer peripheral edge of each of the second crimping rings meshing with the toothed outer peripheral edge of a respective one of the first crimping rings.

### BRIEF DESCRIPTION OF THE DRAWINGS

The above-mentioned aspects of the present disclosure and the manner of obtaining them will become more apparent and the disclosure itself will be better understood by reference to the following description of the embodiments of the disclosure, taken in conjunction with the accompanying drawings, wherein:
FIG. 1 is a schematic perspective view of a windrowing vehicle and a mower-conditioner implement head.
FIG. 2 is a schematic side elevation sectioned view of a portion of the mower conditioner, showing the conditioning roller assembly of the mower conditioner in a mounted state.
FIG. 3 is an exploded view of the conditioning rollers separate from the mounting structures.
FIG. 4 is a schematic elevation view of the conditioning rollers separate from the mounting structures.
FIG. 5 is a schematic perspective sectioned view of one end portion of one of the segmented conditioning rollers.
FIG. 6 is a schematic perspective exploded view of the end portion of the one of the conditioning rollers of FIG. 5.
FIG. 7 is an enlarged view of the circled area of FIG. 4 identified by the number "7" showing the outer peripheral edge of the crimping rings.
FIG. 8 is a schematic end elevation view of the conditioning roller assembly of FIG. 4.
FIG. 9 is a schematic elevation view of an alternative embodiment of the conditioning roller apparatus including a crimping ring on one roller and a corresponding ring receiving groove on the other roller.
FIG. 10 is a perspective view of an alternative embodiment of a conditioning roller.
FIG. 11 is an exploded view of a portion of the conditioning roller of FIG. 10.
FIG. 12 is an exploded view of another alternative embodiment of a conditioning roller.

### DETAILED DESCRIPTION

Referring to the Figures, wherein like numerals indicate corresponding parts throughout the several views, a forage harvesting apparatus in the form of a mower conditioner implement is generally shown at 20. The example embodiment of the mower conditioner implement 20 shown in the Figures is configured for mounting to a forward end of an agricultural vehicle 22, such as a self-propelled windrower. However, it should be appreciated that the teachings of this disclosure may be applied to other platforms, such as but not limited to, the mower conditioner implement 20 being configured for connection to a conventional tractor, i.e., wherein the mower conditioner implement 20 is drawn behind the tractor or attached to a forward end of a conventional agricultural tractor. The present disclosure is particularly directed to the construction of the conditioning roller assembly 28, which construction may also be used in other agricultural apparatus such as a forage harvester.

The mower conditioner implement 20 includes a cutting system 24 that is operable to mow and collect standing crop material in a field, and a conditioning roller assembly 28 that is operable to condition cut crop material 37 as it moves through the mower conditioner implement 20 to improve its drying characteristics. The crop material may include, but is not limited to, alfalfa, grass, alfalfa grass mix, timothy, or other forages.

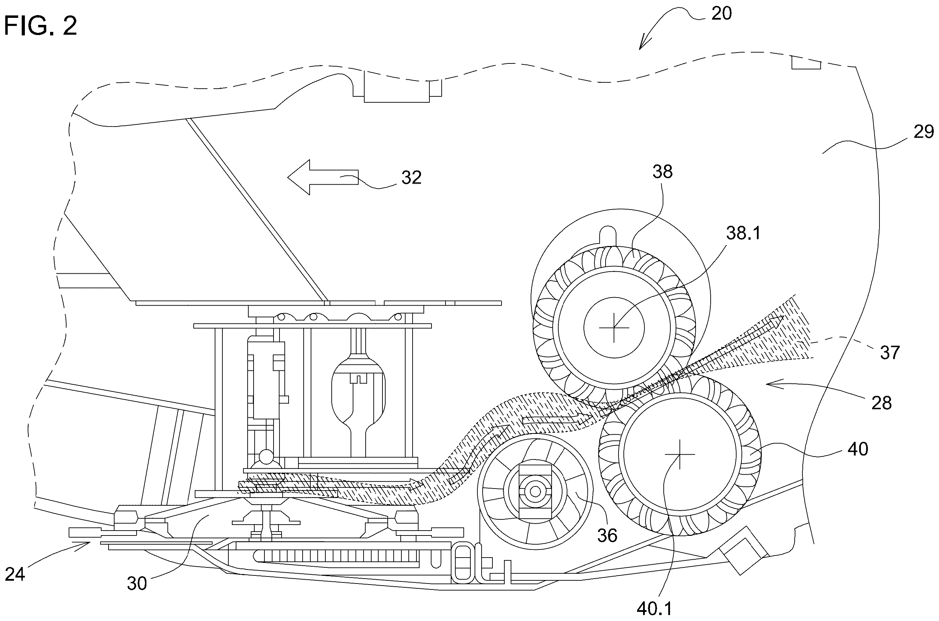

Referring to FIG. 2, the mower conditioner implement 20 includes a frame 29. The frame 29 may include, but is not limited to, the various members, panels, supports, braces, beams, etc., necessary to support the various components and systems of the mower conditioner implement 20 as described below. In one embodiment, the frame 29 may be attached to a forward end of the agricultural vehicle 22. In other embodiments, the frame 29 may be attached to the agricultural vehicle 22 with a drawbar and drawn behind the agricultural vehicle 22.

The cutting system 24 is coupled to the frame 29 and is operable to cut standing crop material in a field. The cutting system 24 may include any mechanism that is capable of cutting the crop material. As shown in the Figures, the cutting system 24 is embodied as a rotary disc cutter bar 30. However, the cutting system 24 is not limited to the example embodiment of the rotary disc cutter bar 30. As such, it should be appreciated that the cutting system 24 may vary from the example embodiment shown in the Figures and described herein.

The cutter bar 30 is supported by the frame 29. The cutter bar 30 extends along an axis that is disposed generally transverse to a direction of travel 32 of the mower conditioner implement 20. The cutter bar 30 includes a plurality of cutting discs 34 spaced along the cutter bar 30 for rotation about respective vertical axes. Each of the cutting discs 34 is coupled to an upright drive shaft to which power is coupled for causing them to rotate in appropriate directions, for delivering cut crop material 37 to an auger 36 disposed rearward of the cutting system 24.

Referring to FIG. 2, the auger 36 is rotatably mounted to the frame 29 and is disposed in front of the conditioning roller assembly 28. The auger 36 is positioned in front of and lower than the conditioning roller assembly 28. In operation, the design of the auger 36 facilitates the delivery of cut crop material 37 into the conditioning roller assembly 28. The cutting system 24 delivers cut crop material 37 to the auger 36, which in turn delivers the cut crop material 37 rearward for further processing by the conditioning roller assembly 28. The conditioned crop material is expelled rearward by the conditioning roller assembly 28 and may be formed into a windrow or swath by upright right and left forming panels and a swathboard. It should be appreciated that the mower conditioner implement 20 may be embodied without the auger 36, such that the cut crop material 37 is delivered directly from the cutting system 24 to the conditioning roller assembly 28.

The conditioning roller assembly 28 may include a system that processes the cut crop material 37 to bend, crimp, and/or crack open stem and stalk portions of the cut crop material 37, and/or at least partially remove a wax material from the cut crop material 37, to accelerate the release of moisture from the cut crop material 37 and reduce dry-down time of the crop material. The conditioning roller assembly 28 is attached to the frame 29. The example embodiment of the conditioning roller assembly 28 shown in the figures and described herein includes an upper conditioning roller 38 and a lower conditioning roller 40. The conditioning roller assembly 28 is positioned to receive the cut crop material 37 between the upper conditioning roller 38 and the lower conditioning roller 40, from the cutting system 24 as described above.

The mower conditioner implement 20 may include a spring-loaded link assembly that yieldably resists upward movement of the upper conditioning roller 38 caused by the cut crop material 37 passing between the upper conditioning roller 38 and the lower conditioning roller 40. The arrangement of gearing is such that the upper conditioning roller 38 and the lower conditioning roller 40 are counter-rotated, i.e., rotate in opposite rotational directions, so as to draw crop in between them.

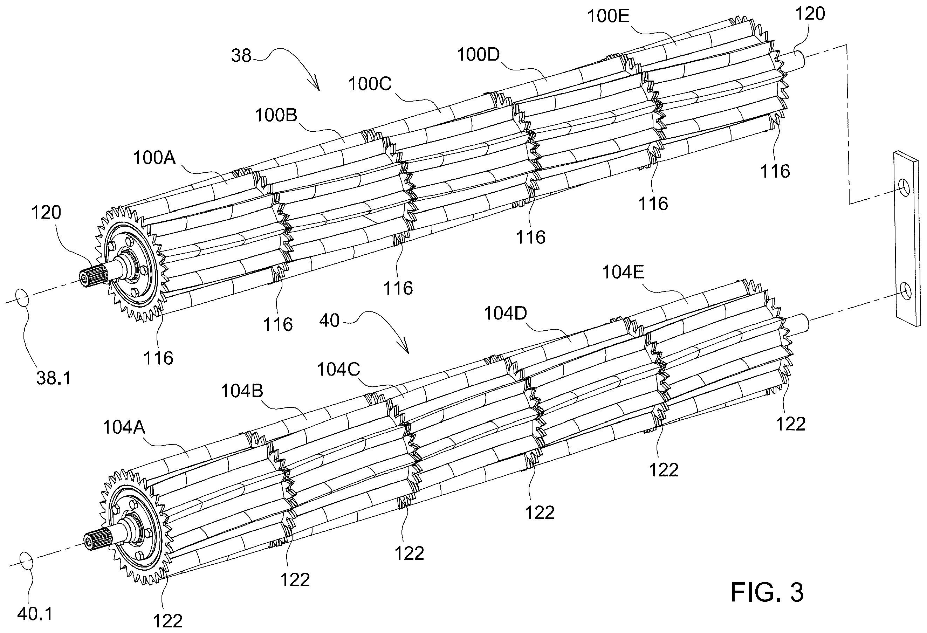

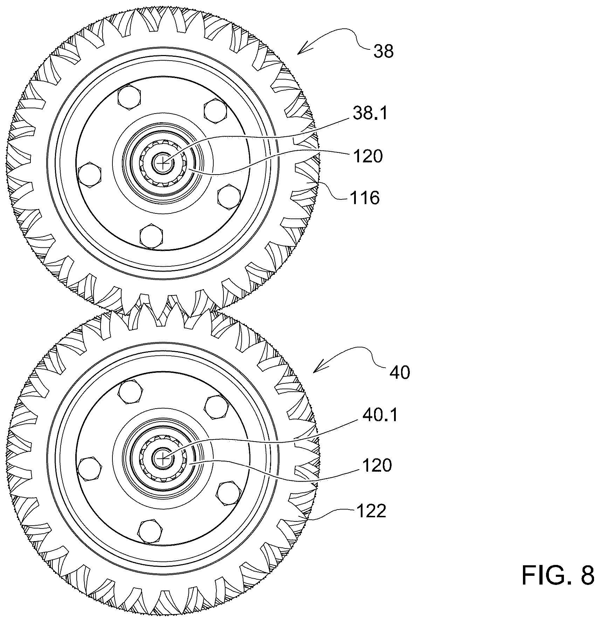

FIG. 3 shows the two conditioning rollers 38 and 40 in an exploded view apart from each other. FIG. 8 shows an end view of the two conditioning rollers 38 and 40 engaged with each other.

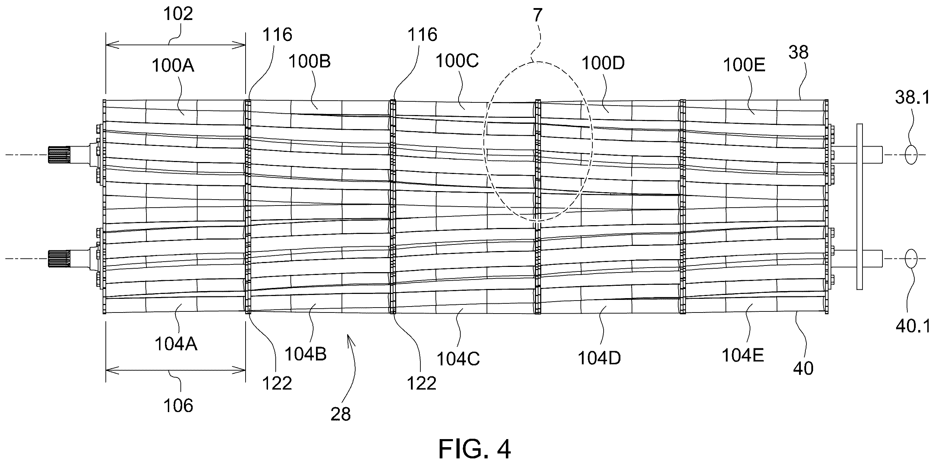

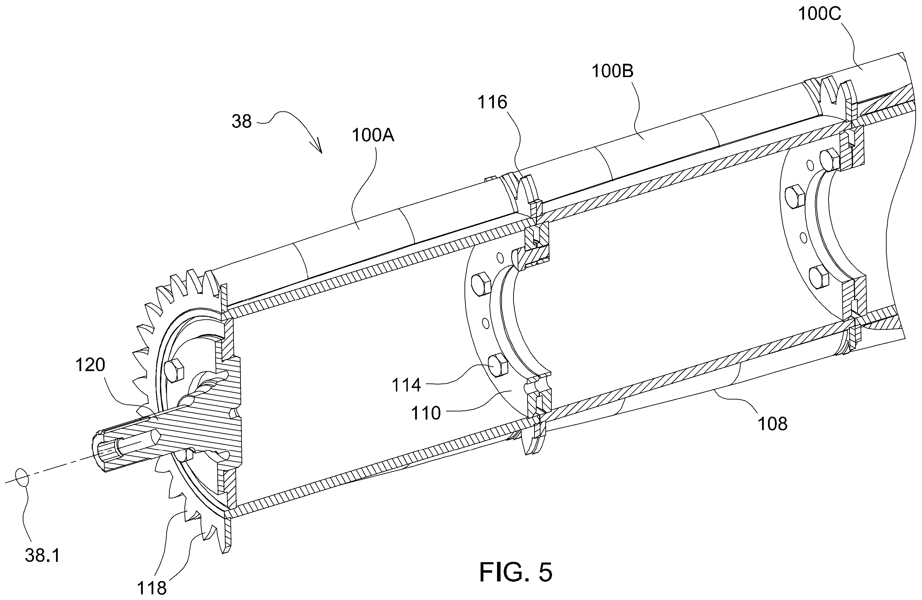

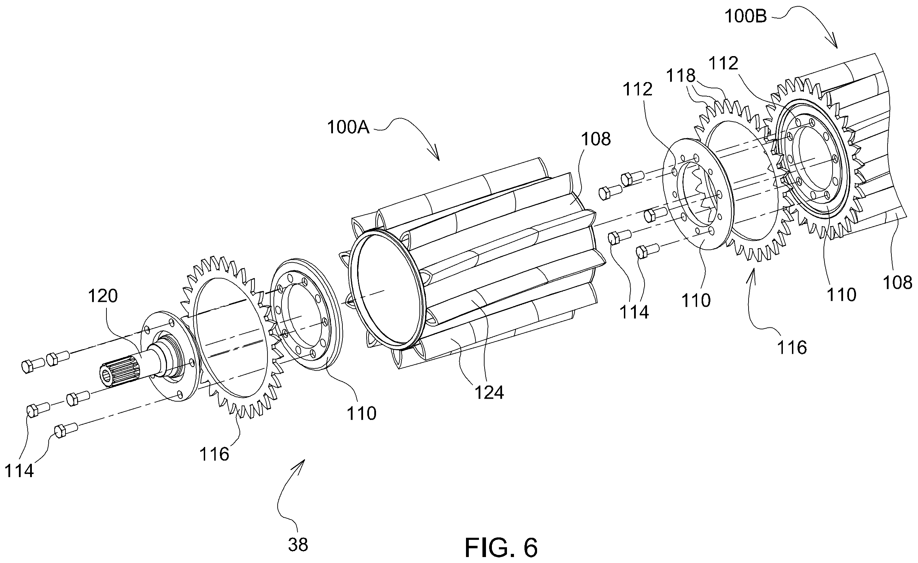

FIG. 4 is a schematic elevation view of the conditioning roller assembly 28 including the first and second conditioning rollers 38 and 40 which rotate about their respective axes 38.1 and 40.1 in opposite directions to condition crop material 37 fed between the first and second conditioning rollers 38 and 40. Both of the rollers are shown as segmented rollers. Further details of the first conditioning roller 38 are shown in FIGS. 5 and 6.

The first conditioning roller 38 includes a plurality of first roller segments 100 aligned along the first rotational axis 38.1. The number of roller segments 100 may vary. In FIG. 4 the first conditioning roller 38 is shown as including five roller segments 100A-100E. Each roller segment 100 has a length 102 parallel to the rotational axis 38.1. The segments 100A-100E are shown in FIG. 4 as having equal lengths, but in some embodiments the segments of a conditioning roller may have different lengths.

Similarly, the second conditioning roller 40 is shown in FIG. 4 as including roller segments 104A-104E having lengths 106. Again, segments 104A-104E are shown in FIG. 4 as having equal lengths, but in some embodiments the segments of a conditioning roller may have different lengths. As is further explained below, what is important is that the segment lengths of the first and second conditioning rollers correspond to each other so that the joints between segments, where a conditioning structure is located, are aligned radially with each other.

The segmented first and second conditioning rollers 38 and 40 each include a plurality of crimping structures or conditioning structures between adjacent sections. The crimping structures are radially aligned with each other so that the crimping structures of the first and second conditioning rollers 38 and 40 work together to crimp the stalks of crop material being fed between the rollers.

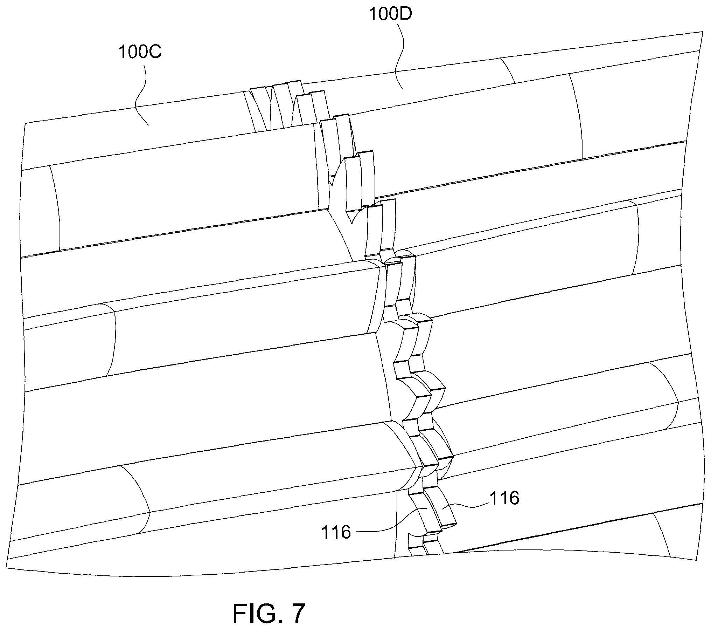

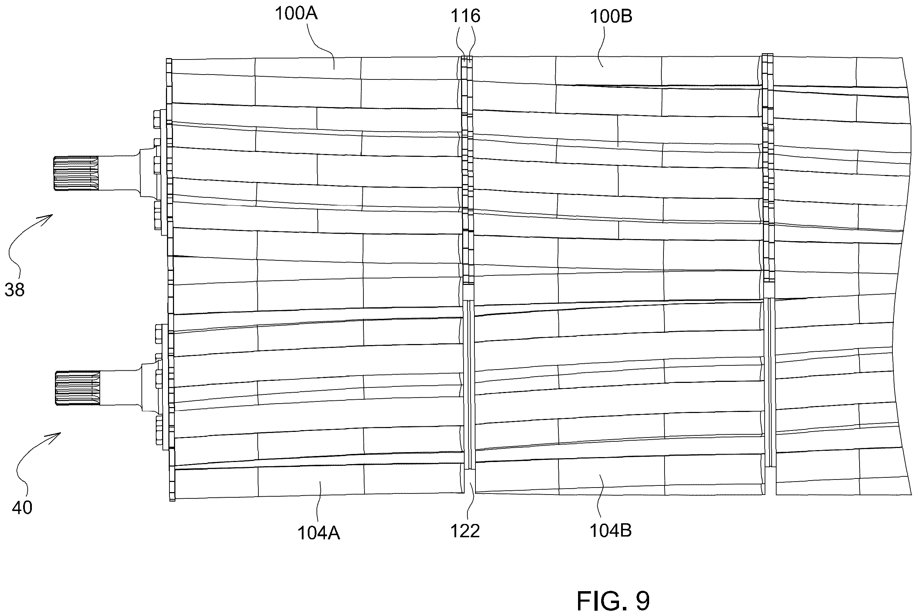

In the embodiment of FIGS. 3-8 the crimping structures are crimping rings in the form of a gear shape. In the embodiment of FIG. 9 the crimping structures of the first conditioning roller 38 are in the form of a crimping ring and the crimping structures of the second conditioning roller 40 are in the form of a corresponding groove in which the crimping ring of the other roller is received.

As is best shown in FIGS. 5 and 6 each of the roller segments such as 100A and 100B includes a cylindrical body 108 having an annular end plate 110 welded to the internal surface of the body 108 near each end. Each end plate 110 carries a plurality of threaded bores 112 for receiving machine bolts 114 which join two adjacent segments 100 together. A crimping structure 116 is sandwiched between the adjacent ends of adjacent segments 100. In the embodiment of FIGS. 3-8 the crimping structures 116 are in the form on one or more disc shaped crimping rings 116 which extend radially with respect to the rotational axis 38.1 or 40.1 of their respective conditioning rollers. Each crimping ring is a generally planar annular disc having a toothed outer peripheral edge 118. As best seen in FIGS. 5-7 each crimping structure 116 may include two such rings sandwiched between the adjacent ends of adjacent roller sections 100.

At each end of the first and second conditioning rollers 38 and 40 an axle piece 120 may be bolted to the end plate 110 of the outermost roller segment such as 100A.

Similarly, the second conditioning roller 40 has crimping structures 122 between its adjacent roller segments 104. In the embodiment of FIGS. 3-8 the crimping structures 122 are gear shaped crimping rings substantially identical to the crimping rings 116 of the first conditioning roller 38. In general, the crimping structures 122 of the second conditioning roller 40 may be described as being complementary in shape to a respective one of the first crimping rings 116 so that each one of the crimping structures 122 is operably associated with the respective one of the first crimping rings 116 to condition crop material fed between the first and second conditioning rollers 38 and 40. As best seen in FIG. 8, when the crimping structures 116 and 122 are shaped as shown in FIGS. 3-8 the teeth of the toothed outer peripheral edges 118 mesh together in the form of a gear set. As shown in FIG. 8, the crimping structures 122 of the second conditioning roller 40 may each comprise a second crimping ring 122 extending radially with respect to the second rotational axis 40.1, each second crimping ring 122 being a generally planar disc located between two adjacent ones of the second roller segments 104, each of the second crimping rings 122 being aligned in a same plane with a respective one of the first crimping rings 116 of the first conditioning roller 38.

In addition to the crimping rings 116, 122 between adjacent roller segments, each roller segment 100, 104 may include a plurality of primarily longitudinally extending conditioning structures 124 projecting radially outward from the respective roller segment. By primarily longitudinally extending it is meant that the structure 124 is aligned more closely with the rotational axis 38.1 or 40.1 than it is with a plane normal to that axis. In the embodiments illustrated the primarily longitudinally extending conditioning structures 124 are shown as having a shallow spiral configuration around the axis 38.1 or 40.1. The primarily longitudinally extending conditioning structures 124 could also extend exactly parallel to the axis 38.1 or 40.1. The primarily longitudinally extending conditioning structures 124 could first spiral in one direction and then reverse in direction to create shallow V-shaped structures.

As previously noted, the lengths 102 and 106 of the roller segments may vary. This distance between adjacent crimping rings 116 may be selected depending on physical properties of the crop being harvested. For example, if a crop is being cut so that the stalks have a length of 24 inches, it would be desirable for the segment lengths 102 and 106 to be less than 24 inches so that a stalk passing between the conditioning rollers 38 and 40 in an orientation parallel to the axes 38.1, 40.1 would be crimped at least once.

In one embodiment each of the first roller segments 100 may have a length parallel to the first rotational axis in a range of from 3 inches to 20 inches, and more preferably in a range of from 6 inches to 12 inches.

For a given mowing and conditioning task, the preferred machine settings to achieve optimum conditioning include selection of the roller segment dimensions along with other machine settings. The relevant machine settings include ground velocity, header speed, roll gap, roll pressure and others. The level of conditioning marks is a result of stalk length and roll configuration, the machine settings listed above, and environmental factors such as moisture content, stem diameter, plant maturity, variety mix, and other factors.

The modular construction of the conditioning rollers disclosed herein provides an increased number of conditioning points as compared with prior designs. The increase in conditioning points is in large part a result of using the laterally spaced crimping structures 116, 122, in addition to radially spaced flutes such as 124. This offers a greater maximum population of conditioning marks possible per roll revolution. Knowing that crop stems move between rolls with random orientation, the probability of achieving greater conditioning with the same roller settings is high.

FIG. 9 illustrates an alternative embodiment where the crimping structures 122 of the second conditioning roller 40 are in the form of grooves 122 configured to receive a respective one of the crimping rings 116 of the first conditioning roller 38, so that stalks of crop material are crimped between one of the rings 116 and a respective one of the complementary grooves 122.

The various embodiments of the conditioning roller assembly 28 disclosed herein provide a universal mechanical means to more uniformly condition crop of all varieties, stem lengths, and yield quantity with less plugging, improving dry down, and enhancing forage quality. These conditioner concepts enable conditioning marks to be placed gently and uniformly along lengths of stems without further severing plants into smaller pieces; or, indelibly damaging them by further separating leaves from branches and branches from stems.

This may be accomplished by segmenting conditioning rollers, operating at traditional speeds, into elements that are shorter than most common stem lengths. Thus, conditioning marks are applied with even spacing along plants no matter their orientation. Likewise, with an operating speed or tangential velocity that matches crop flow, these rolls offer the same resistance to plugging and recirculation as standard, fluted rolls.

The crimping structures 116 and 122 are not necessarily aligned perpendicular to axes 38.1 and 40.1, although they may be. Nor does the rotational speed have to match crop velocity. The conditioning structures on the conditioning rollers may include circular disk shaped elements such as shown in FIGS. 3-8, and disc and groove arrangements such as shown in FIG. 9, or other arrangements. The conditioning rollers may also include conditioning structures 124 that extend in a primarily longitudinal direction.

The circumferential pitch between conditioning structures 124 and the segment lengths 102, 106 may be optimally selected depending upon the crop type and length of cut. Depending on crops and machine settings, conditioning elements may be optimized for conditions: larger spacing for longer, heavier crop and tighter spacing for shorter, lighter crop.

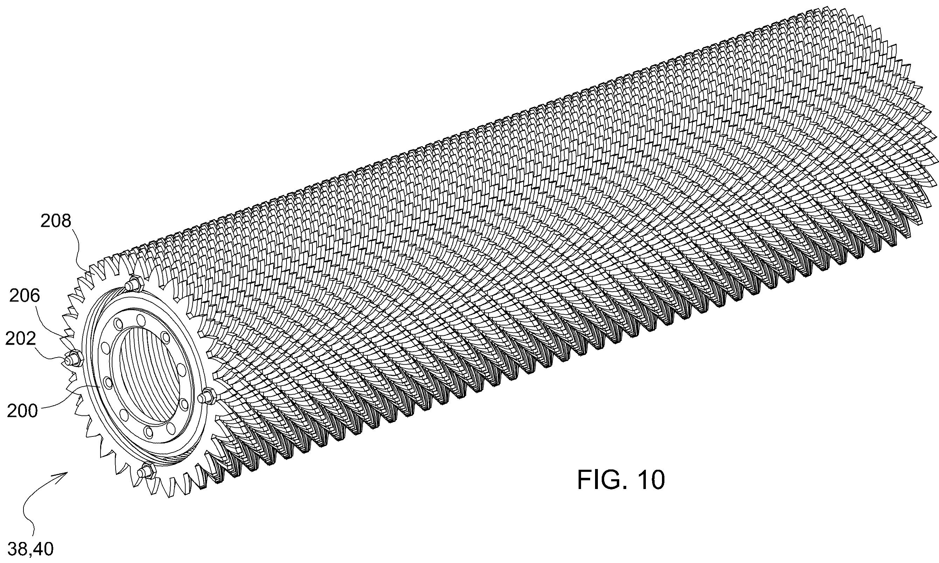

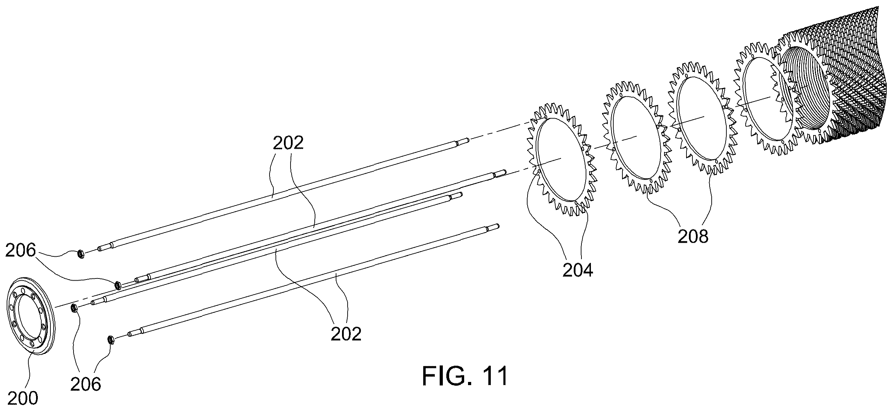

### ALTERNATIVE EMBODIMENT OF FIGS. 10-12:

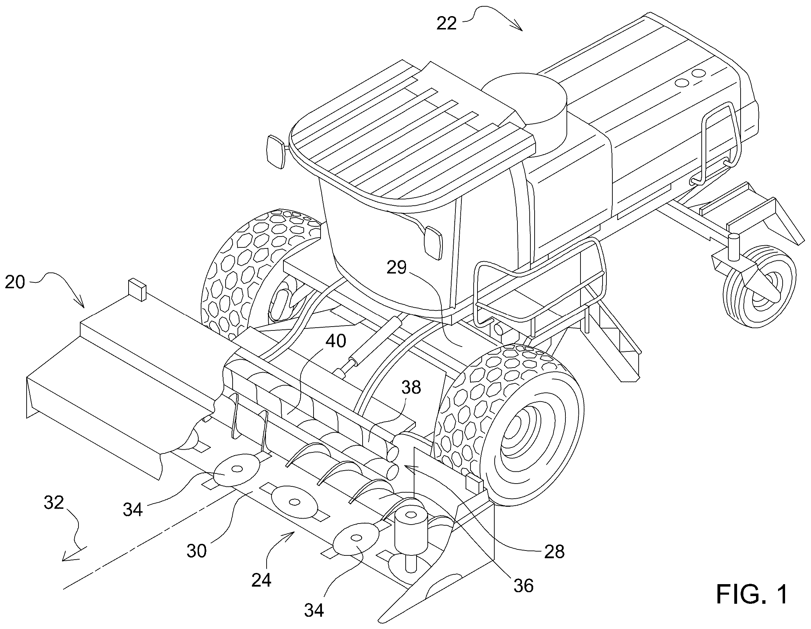

FIGS. 10 - 12 show two alternative embodiments in which the roller segments are formed as a plurality of spacer rings, and the roller is formed as a stack of alternating spacer rings and crimping rings held together as a compressed stack. There is no need for the internal tubular support structure used in the rollers of FIGS. 1-9.
FIGS. 10-12 show a roller 38 or 40 formed in this manner. The rollers of FIGS. 10-12 have an end plate 200 at each end of the roller. A plurality of tie rods 202 extend between the two end plates 200, and also extend through openings 204 circumferentially spaced around each of the spacer rings or crimping rings. Nuts 206 on the ends of the tie rods 202 hold the stack of rings together in compression.

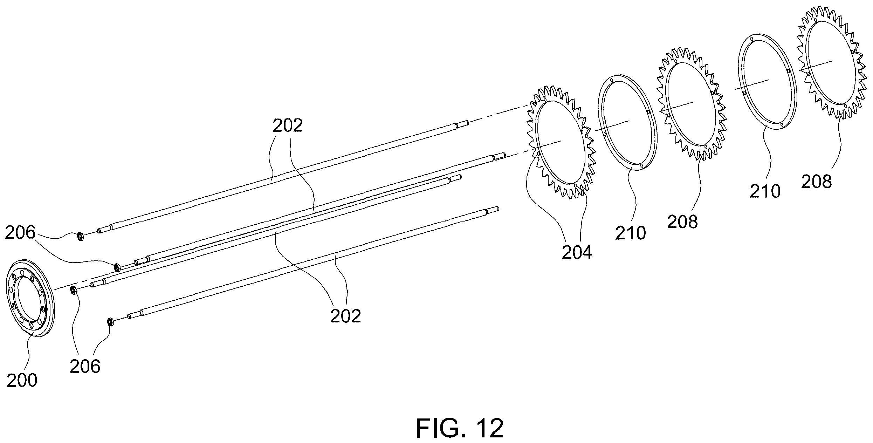

In the embodiment of FIG. 12, crimping rings 208 alternate with spacer rings 210. The thickness of the spacer rings 210 may be selected to determine the spacing between adjacent crimping rings 208. The spacer rings 210 may be considered as roller segments.

In the embodiment of FIGS. 10-11, all of the rings are formed as crimping rings 208. Alternate crimping rings 208 may be considered as spacer rings and as roller segments. As best seen in FIG. 10 adjacent crimping rings 208 may have their teeth indexed circumferentially to form spiral rows of teeth.

In the embodiments of FIGS. 10-12 the spacing between adjacent crimping rings 208 is greatly reduced as compared to the embodiments of FIGS. 1-9. In the embodiments of FIGS. 10-12 the center to center spacing between adjacent crimping rings 208 may be as small as 0.25 inch.

Thus, it is seen that the apparatus and methods of the embodiments disclosed herein readily achieve the ends and advantages mentioned as well as those inherent therein. While certain preferred embodiments have been illustrated and described for purposes of the present disclosure, numerous changes in the arrangement and construction of parts and steps may be made by those skilled in the art, which changes are encompassed within the scope and spirit of the present disclosure as defined by the appended claims.

## Claims

1. A forage conditioning apparatus, comprising:
a first conditioning roller (38) configured to rotate about a first rotational axis (38.1); and
a second conditioning roller (40) configured to rotate about a second rotational axis (40.1), the first and second conditioning rollers being arranged to rotate in opposite directions about their respective rotational axes to condition crop material (37) fed between the first and second conditioning rollers;
wherein the first conditioning roller is a first segmented roller including:
a plurality of first roller segments (100) aligned along the first rotational axis; and
a plurality of first crimping rings (116) extending radially with respect to the first rotational axis, each first crimping ring being a generally planar disc located between two adjacent ones of the first roller segments.

2. The forage conditioning apparatus of claim 1, wherein:
the second conditioning roller (40) is a second segmented roller including:
a plurality of second roller segments (104) aligned along the second rotational axis (40.1); and
a plurality of crimping structures (122), each crimping structure being located between two adjacent ones of the second roller segments, and each crimping structure being complementary in shape to a respective one of the first crimping rings (116) so that each one of the crimping structures is operably associated with the respective one of the first crimping rings to condition crop material (37) fed between the first and second conditioning rollers.

3. The forage conditioning apparatus of claim 2, wherein:
the crimping structures (122) of the second conditioning roller (40) each comprise a groove (122) configured to receive the respective one of the first crimping rings (116) to condition crop material (37) between the groove and the respective one of the first crimping rings.

4. The forage conditioning apparatus of claim 2, wherein:
the crimping structures (122) of the second conditioning roller (40) each comprise a second crimping ring (122) extending radially with respect to the second rotational axis, each second crimping ring being a generally planar disc located between two adjacent ones of the second roller segments (104), each of the second crimping rings being aligned in a same plane with a respective one of the first crimping rings (116).

5. The forage conditioning apparatus of claim 4, wherein:
the first and second crimping rings (116, 122) each include a toothed outer peripheral edge (118), and the teeth of each of
the first crimping rings (116) mesh with the teeth of a respective one of the second crimping rings (122).

6. The forage conditioning apparatus of any of the above claims, wherein:
each of the first roller segments (100) includes a generally cylindrical outer surface and a plurality of primarily longitudinally extending conditioning structures (124) projecting radially outward from the first roller segment.

7. The forage conditioning apparatus of any of the above claims, wherein:
each of the first roller segments (100) has a length (102) parallel to the first rotational axis (38.1) in a range of from 3 inches to 20 inches.

8. The forage conditioning apparatus of any of the above claims, wherein:
each of the first roller segments has a length (102) parallel to the first rotational axis (38.1) in a range of from 6 inches to 12 inches.

9. The forage conditioning apparatus of any of the above claims, wherein:
adjacent first roller segments (100) are bolted together with at least one of the first crimping rings (116) sandwiched between the adjacent first roller segments.

10. The forage conditioning apparatus of claim 1, wherein:
the plurality of first roller segments (100) is formed as a plurality of spacer rings (208, 210); and
the plurality of first crimping rings (208) are alternated with the spacer rings.

11. The forage conditioning apparatus of claim 10, wherein:
the spacer rings are also crimping rings (208).

12. The forage conditioning apparatus of claim 10 or 11, wherein:
the plurality of spacer rings (210) and the plurality of first crimping rings (208) are held together in a compressed stack by a plurality of tie rods (202) extending through the spacer rings and the first crimping rings.
